# EUROPEAN PATENT SPECIFICATION

(11) **EP 1 738 711 B1**
(45) Date of publication and mention of the grant of the patent: **07.01.2009**
(21) Application number: 06115546.1
(22) Date of filing: 15.06.2006
(51) Int. Cl.: A61C 1/00, A61G 15/14

(54) **A dental unit**
Dentaleinheit
Unité dentaire

(30) Priority: 30.06.2005 IT BO20050438
(43) Date of publication of application: 03.01.2007
(73) Proprietor: CASTELLINI S.p.A., I-40013 Castel Maggiore (Bologna) (IT)
(72) Inventor: CASTELLINI, Franco, 40124, BOLOGNA (IT)
(74) Representative: Lanzoni, Luciano

(56) References cited:
- WO-A-98/27886
- US-A- 5 689 159
- US-A- 5 898 112
- US-A- 5 980 248
- US-A1- 2004 059 197

## Description

The present invention relates to a dental unit, in particular a dental unit in which the operating parameters of the handpieces can be displayed.

At present, a dental unit in its most basic form typically consists of a chair, a column-like base which mounts the main and auxiliary items of dental equipment, a tray for a main set of handpieces and, if necessary, another tray for an accessory set of handpieces.

The dental unit is normally equipped with a plurality of dental handpieces, divided substantially into instruments, for example, the turbine and the micromotor, used for dental operations of traditional conservative type, and instruments, for example, the syringe and the polymerising lamp, used for complementary stages of dental treatment.

These handpieces may be located, depending on function, either on the main tray or on the accessory tray.

Over time, this basic structure has been constantly improved in both the internal and external features of the dental unit. Thus, the latest dental units include complex water and compressed air systems, one or more microprocessor units designed to control the functions of the dental unit, and other technological developments.

Document US 2004/0059197 A1, for exemple, discloses a dental unit with a chair, a base next to the chair, a handpiece tray holding hand pieces, a control unit and a screen display serving also as input means.

These continual improvements, combined with the possibility of using microprocessors, have made it possible to improve the handpieces and other working parts of the dental unit in order to optimise the unit, making it as complete and versatile as possible, and thereby avoiding the need to provide separate handpieces or apparatus (often referred to as "stand alone" apparatus) for special operations on patients.

One of these improvements consisted in fitting the dental unit with a brushless micromotor (see also patent application EP-1.547.565) allowing the dental unit to be used for traditional, conservative type treatments, as well as for implants or endodontic operations. This diversification has been made possible thanks also to the presence of a control unit, connected to and acting in conjunction with the central microprocessor of the dental unit to continuously control the speed and torque of the brushless micromotor according to programmed parameters that depend on the type of operation or treatment the dental unit is used for.

This has made it possible to enhance the built-in features of the dental unit itself to extend the capabilities of the unit to include new functions.

One of the needs which current dental units are unable to satisfy, however, is that of monitoring the actual "work" done by the handpieces during use (for example, by bur handpieces for implant applications or by dental filing tools for endodontic operations) allowing the dental surgeon to view the physiological and structural parameters of the parts concerned immediately: indicating, for example, how compact a tooth being treated is, whether the tool on the handpiece is working on soft tissue, etc.

These parameters are very important because they enable the dental surgeon to make an immediate decision as to the therapy to apply next or the implant to use on the patient.

At present, data regarding operating torque actually applied to a handpiece can be recorded on suitable stand-alone equipment to which the handpieces used for these treatments can be connected.

This equipment has a unit that records the torque used during treatment and saves the information to a smart card. The information recorded can then be transferred to another unit or PC capable of displaying or printing it.

The information obtained in this way, however, is used for statistical purposes only, since the treatment and subsequent therapies have already been applied on the basis of what the surgeon saw at the time of the treatment and on his/her experience.

The present invention therefore has for an aim to overcome the above mentioned drawbacks by providing a dental unit offering the possibility of displaying the torque applied to the handpieces during operation.

In accordance with the invention, this aim is achieved by a dental unit in accordance with appended claim 1.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a dental unit according to the present invention in a schematic side view with some parts cut away to better illustrate others;
- Figure 2 is a diagram illustrating some of the parts of the dental unit of Figure 1.

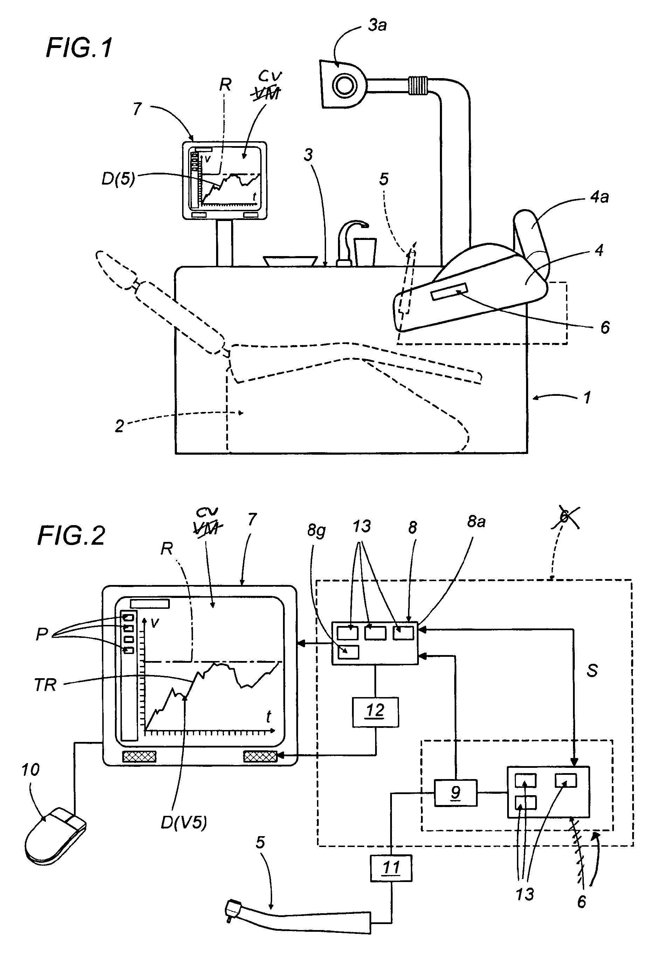

With reference to the accompanying drawings, in particular Figure 1, the dental unit according to the invention, labelled 1 in its entirety, essentially comprises, insofar as is relevant to the present invention:
- a chair 2;
- a base 3 positioned next to the chair 2 and mounting main or auxiliary equipment (some of which will not be described here since they are of well-known type and do not strictly form part of the invention);
- at least one handpiece tray 4 (either independent or supported by the base 3 through a column 4a) holding a plurality of operating or auxiliary handpieces 5 for dental operations of traditional conservative type, for implants and/or for endodontic surgery (for example, a turbo-drill, a syringe, a handpiece with a brushless micromotor, a traditional micromotor, etc.);
- a primary microprocessor unit 6 (illustrated as a block in Figure 1) for controlling the main and auxiliary functions of the dental unit 1 and of the handpieces 5.

Obviously, the dental unit may include other components to complete its structure, such as an assistant's tray for holding additional handpieces, a light 3a, etc.

As shown in Figure 1, the dental unit 1 also comprises:
- a data display screen 7 associated with the dental unit 1;
- an interface unit 8 connected, on one side, to the microprocessor 6 and, on the other, to the screen 7 and designed to receive from the microprocessor 6 at least one signal S corresponding to a data item D that is a function of the torque value V5 of the active handpieces 5 and to convert it into at least one graphic viewing field CV on the screen 7 in real time so as display the graph TR of torque over time t corresponding to the use of the selected handpiece 5.

In other words, a dental unit structured in this way can display the torque applied to the selected handpiece 5 in real time, that is to say, while the handpiece 5 is actually being used for treatment on a patient.

As shown also in Figure 2, the interface unit 8 is a separate secondary microprocessor unit 8a.

Alternatively, the interface unit 8 may comprise a real-time graphic processing unit 8g.

According to another alternative, the interface unit 8 may be built into the primary microprocessor unit 6.

Figure 2 also shows how the interface unit 8 makes it possible to produce a Cartesian graph showing, on the y-axis, the values V of the aforementioned torque and, on the x-axis, the values of the time t within which the real-time graph TR of the torque value V5 is displayed.

In addition to the above, the viewing field may also, advantageously, present other data related to the torque value displayed in real time.

Thus the microprocessor 6 may support a unit 9 for controlling at least the torque value V5 of the selectable handpieces 5. These values are variables forming part of parameters P that depend on the type of application, that is, traditional conservative operations, implants or endodontic operations.

The settings defined by the parameters P of the handpiece 5 working values V5 may be displayed beside the graph in the graphic viewing field CV on the screen 7 according to the selected handpiece 5, for example, in the form of different icons in different colours depending on the type of treatment.

As the interface unit 8 consists of a secondary microprocessor, the parameters P of the operating values may be stored in the secondary microprocessor itself and may be selected directly from the graphic viewing field CV using a first peripheral unit 10 (for example, a mouse) connected to the interface unit 8 and designed to communicate both ways with the primary microprocessor 6 in order to make the appropriate selections relating to the handpieces 5.

Similarly, the above mentioned control unit 9 may be equipped with means 11 for limiting the maximum value VM assignable to the torque value V according to the type of operation and type of handpiece 5 selected.

The maximum value VM of the torque value V assignable to the selected handpiece 5 may be displayed in the graphic viewing field CV in the form of a straight line R parallel to the x-axis of the graph.

The two-way connection between the interface unit 8 and the primary microprocessor 6 makes it possible to generate the graph TR in the graphic viewing field CV in real time when the selected handpiece 5 is switched on and, if necessary, keeps the graph TR on screen when the handpiece 5 is switched off so that the graph TR may be continued from the same point when the handpiece 5 is switched on again, thus obtaining an uninterrupted graph TR on the screen 7 throughout the treatment required.

For completing the dental unit structure, the interface unit 8 might be connected to a second peripheral unit 12 for issuing an audible signal, activated by the interface unit 8 itself when the torque value V of the handpiece 5 being used approaches the maximum value VM assigned. The peripheral unit 12 may be set to increase or decrease the intensity of the audible signal depending on how close the torque value V5 recorded at that moment is to the maximum value VM set.

In this way, the surgeon can be alerted immediately to the maximum torque applied to the handpiece being used.

For improved performance of the dental unit 1, the interface unit 8 and the microprocessor 6 might be equipped with memory banks 13 enabling the graphs TR plotted on the screen 7 in real time to be stored and thereby permitting the creation of an archive of specific patient treatments.

This storage facility would also enable two or more stored graphs TR to be displayed simultaneously by the interface unit 8 and superimposed in the viewing field CV on the screen 7 so as to compare different types of treatment or different types of tissue.

A dental unit made in this way thus achieves the aforementioned aims thanks to the possibility of administering dental treatments with handpieces of different types whose operation is constantly monitored at least as regards the torque applied to them during operation.

On-screen displaying of torque/time graphs on line gives the surgeon an immediate view of the torque applied to the tool during work.

This information, for example regarding a bur (during implant treatments) or a dental filing tool (during endodontic treatments) is important and useful because it provides an immediate indication of the tooth or bone structure of the part being treated and enables the surgeon to quickly decide how to proceed with the treatment, what diameter or length of tools to use, etc.

All of this is achieved in a full-featured structure allowing extremely rapid display and selection times, with obvious advantages for both the surgeon and the patient.

It will be understood that the invention described may be useful in many industrial applications and may be modified and adapted in several ways without thereby departing from the scope of the claims.

## Claims

1. A dental unit (1) comprising at least:
- a chair (2);
- a base (3) positioned next to the chair (2) and mounting main or auxiliary equipment;
- at least one handpiece tray (4) holding a plurality of operating or auxiliary handpieces (5) for dental operations of traditional conservative type, for implants and/or for endodontic surgery;
- a primary microprocessor unit (6) for controlling the main and auxiliary functions of the dental unit (1) and of the handpieces (5); the dental unit (1) further comprising:
- a data display screen (7) associated with the dental unit (1);
- an interface unit (8) connected, on one side, to the microprocessor (6) and, on the other, to the screen (7) and designed to receive from the microprocessor (6) at least one signal (S) corresponding to a data item (D) that is a function of the torque value (V5) of the active handpiece (5) and to convert this signal into at least one graphic viewing field (CV) on the screen (7) in real time so as to display the graph (TR) of torque over time (t) corresponding to the use of the selected handpiece (5); the microprocessor (6) supporting a unit (9) for controlling at least the torque value (V5) of the selectable handpieces (5), being variables forming part of parameters (P) that depend on the type of application, that is, traditional conservative operations, implants or endodontic operations; the parameters (P) of the operating values (V5) of the handpiece (5) being displayed in the graphic viewing field (CV) on the screen (7) in accordance with the handpiece (5) selected; wherein the interface unit (8) is a secondary microprocessor (8a) and the parameters (P) of the operating values being stored in said secondary microprocessor and being selected directly from the graphic viewing field (CV) through a peripheral unit (10) connected to the interface unit (8) itself.

2. The dental unit according to claim 1, **characterised in that** said secondary microprocessor unit (8a) is separate.

3. The dental unit according to claim 1, **characterised in that** the interface unit (8) comprises a real-time graphic processing unit (8g).

4. The dental unit according to claim 1, **characterised in that** the interface unit (8) forms an integral part of the primary microprocessor unit (6).

5. The dental unit according to claim 1, **characterised in that** the interface unit (8) produces a Cartesian graph showing, on the y-axis, the values (V) of torque and, on the x-axis, the values of the time (t) within which the real-time graph (TR) of the torque value (V5) is displayed.

6. The dental unit according to claim 1 **characterised in that** the control unit (9) is equipped with means (11) for limiting the maximum value (VM) assignable to the torque value (V) according to the type of operation and type of handpiece (5); the maximum value (VM) of the value (V) assignable to the handpiece (5) being displayed in the graphic viewing field (CV) in the form of a straight line (R) parallel to the x-axis of the graph.

7. The dental unit according to claim 6, **characterised in that** the interface unit (8) comprises a peripheral unit (12) for issuing an audible signal, activated by the interface unit (8) itself when the torque value (V) approaches the maximum value (VM) assigned.

8. The dental unit according to claim 1, **characterised in that** the interface unit (8) and the microprocessor (6) are equipped with memory banks (13) for storing the graphs (TR) plotted on the screen (7) in real time.

9. The dental unit according to claim **8, characterised in that** the interface unit (8) enables two or more stored graphs (TR) to be displayed simultaneously and superimposed in the viewing field (CV) on the screen (7).

10. The dental unit according to claim 1, **characterised in that** the interface unit (8) is connected to and communicates with the microprocessor (6) in such a way as to generate the graph (TR) in the graphic viewing field (CV) in real time when the selected handpiece (5) is switched on and to keep the graph (TR) on screen when the handpiece (5) is switched off so that the graph (TR) may be continued from the same point when the handpiece (5) is switched on again, thus obtaining an uninterrupted graph (TR) on the screen (7).

## Patentansprüche

1. Dentaleinheit (1) bestehend aus zumindest:
- einem Patientenstuhl (2);
- einem Sockel (3), der neben dem Patientenstuhl (2) angeordnet ist und Haupt- oder Zusatzausrüstungen trägt;
- mindestens einer Instrumentenablage (4), die mit mehreren Behandlungs- oder Zusatz-Handstücken (5) für zahnärztliche Behandlungen herkömmlicher konservativer Art, für Implantate und/oder für die endodontische Chirurgie ausgerüstet ist;
- einer primären Mikroprozessoreinheit (6) zur Steuerung der Haupt- und Zusatzfunktionen der Dentaleinheit (1) und der Handstücke (5); wobei die Dentaleinheit (1) ferner Folgendes beinhaltet:
- einen Datenanzeige-Bildschirm (7), der mit der Dentaleinheit (1) verbunden ist;
- eine Schnittstelleneinheit (8), die auf einer Seite an den Mikroprozessor (6) und auf der anderen Seite an den Bildschirm (7) angeschlossen ist und dafür ausgelegt ist, von dem Mikroprozessor (6) zumindest ein Signal (S) zu empfangen, das einem Datensatz (D) entspricht, der eine Funktion des Drehmomentwertes (V5) des aktiven Handstückes (5) darstellt, und dieses Signal in Echtzeit in zumindest ein grafisches Anzeigefeld (CV) auf dem Bildschirm (7) umzuwandeln, so dass das Kurvenschaubild (TR) des Drehmoments im Zeitverlauf (t), das der Verwendung des gewählten Handstücks (5) entspricht, angezeigt wird; wobei der Mikroprozessor (6) eine Einheit (9) zur Steuerung zumindest des Drehmomentwertes (V5) der wählbaren Handstücke (5) unterstützt, wobei diese Werte Variablen innerhalb von Parametern (P) darstellen, die jeweils von der Anwendungsart abhängen, das heißt herkömmliche konservative Behandlungen, Implantate oder endodontische Chirurgie; wobei die Parameter (P) der Betriebswerte (V5) des Handstückes (5) in dem grafischen Anzeigefeld (CV) auf dem Bildschirm (7) entsprechend des gewählten Handstücks (5) angezeigt werden; worin die Schnittstelleneinheit (8) ein sekundärer Mikroprozessor (8a) ist und die Parameter (P) der Betriebswerte in dem genannten sekundären Mikroprozessor gespeichert sind und direkt vom grafischen Anzeigefeld (CV) aus über eine periphere Einheit (10) gewählt werden, die an die Schnittstelleneinheit (8) angeschlossen ist.

2. Dentaleinheit nach Anspruch 1, **dadurch gekennzeichnet, dass** die sekundäre Mikroprozessoreinheit (8a) separat ist.

3. Dentaleinheit nach Anspruch 1, **dadurch gekennzeichnet, dass** die Schnittstelleneinheit (8) eine in Echtzeit arbeitende grafische Verarbeitungseinheit (8g) beinhaltet.

4. Dentaleinheit nach Anspruch 1, **dadurch gekennzeichnet, dass** die Schnittstelleneinheit (8) einen ergänzenden Bestandteil der primären Mikroprozessoreinheit (6) bildet.

5. Dentaleinheit nach Anspruch 1, **dadurch gekennzeichnet, dass** die Schnittstelleneinheit (8) ein kartesisches Kurvenschaubild erzeugt, das auf der y-Achse die Werte (V) für das Drehmoment und auf der x-Achse die Werte für die Zeit (t) anzeigt, worin die Echtzeitkurve (TR) des Drehmomentwertes (V5) angezeigt wird.

6. Dentaleinheit nach Anspruch 1, **dadurch gekennzeichnet, dass** die Steuereinheit (9) mit Mitteln (11) zur Begrenzung des zulässigen Höchstwertes (VM) für den Drehmomentwert (V) in Abhängigkeit von der Art der Behandlung und der Art des Handstückes (5) ausgestattet ist; wobei der Höchstwert (VM) für den zulässigen Wert (V) des jeweiligen Handstücks (5) im grafischen Anzeigefeld (CV) in Form einer geraden Linie (R) angezeigt wird, die parallel zu der x-Achse des Kurvenschaubildes verläuft.

7. Dentaleinheit nach Anspruch 6, **dadurch gekennzeichnet, dass** die Schnittstelleneinheit (8) eine periphere Einheit (12) zur Ausgabe eines hörbaren Signals beinhaltet, das von der Schnittstelleneinheit (8) ausgelöst wird, wenn der Drehmomentwert (V) sich dem zulässigen Höchstwert (VM) nähert.

8. Dentaleinheit nach Anspruch 1, **dadurch gekennzeichnet, dass** die Schnittstelleneinheit (8) und der Mikroprozessor (6) mit Speicherbänken (13) ausgestattet sind, die zur Speicherung der Kurvenschaubilder (TR) dienen, die auf dem Bildschirm (7) in Echtzeit aufgezeichnet werden.

9. Dentaleinheit nach Anspruch 8, **dadurch gekennzeichnet, dass** die Schnittstelleneinheit (8) es ermöglicht, dass zwei oder mehr gespeicherte Kurvenschaubilder (TR) gleichzeitig und einander überlagert im Anzeigefeld (CV) auf dem Bildschirm (7) angezeigt werden.

10. Dentaleinheit nach Anspruch 1, **dadurch gekennzeichnet, dass** die Schnittstelleneinheit (8) derart mit dem Mikroprozessor (6) verbunden ist und mit diesem kommuniziert, dass das Kurvenschaubild (TR) im grafischen Anzeigefeld (CV) in Echtzeit erzeugt wird, wenn das gewählte Handstück (5) eingeschaltet wird, und dass das Kurvenschaubild (TR) am Bildschirm erhalten bleibt, wenn das Handstück (5) ausgeschaltet wird, so dass das Kurvenschaubild (TR) beim erneuten Einschalten des Handstücks (5) am selben Punkt fortgesetzt werden kann, um ein unterbrechungsfreies Kurvenschaubild (TR) auf dem Bildschirm (7) zu erhalten.

## Revendications

1. Une unité dentaire (1) comprenant au moins :
- un fauteuil (2) ;
- un bloc (3) positionné à côté du fauteuil (2) et supportant une instrumentation principale ou auxiliaire ;
- au moins une tablette (4) pour pièces à main supportant une pluralité de pièces à main (5) opérationnelles ou auxiliaires pour des opérations dentaires conservatrices traditionnelles, pour des implants et/ou pour des opérations de chirurgie endodontique ;
- une unité à microprocesseur principale (6) pour commander les fonctions principales et auxiliaires de l'unité dentaire (1) et des pièces à main (5) ; l'unité dentaire (1) comprenant en outre :
- un écran (7) d'affichage de données, associé à l'unité dentaire (1) ;
- une unité d'interface (8) reliée, d'un côté, au microprocesseur (6) et, de l'autre, à l'écran (7) et destinée à recevoir en provenance dudit microprocesseur (6) au moins un signal (S) correspondant à une donnée (D) qui est fonction de la valeur de couple (V5) de la pièce à main (5) active et à convertir ce signal dans au moins un champ de visualisation graphique (CV) sur l'écran (7), en temps réel, de manière à afficher le graphique (TR) du couple en fonction du temps (t) correspondant à l'utilisation de la pièce à main (5) sélectionnée ; le microprocesseur (6) supportant une unité (9) pour contrôler au moins la valeur de couple (V5) des pièces à main (5) sélectionnables, ces valeurs étant des variables faisant partie de paramètres (P) qui dépendent du type d'application, c'est-à-dire, opérations conservatrices traditionnelles, implants ou opérations endodontiques ; les paramètres (P) des valeurs opérationnelles (V5) de la pièce à main (5) étant affichés dans le champ de visualisation graphique (CV) sur l'écran (7) en fonction de la pièce à main (5) sélectionnée ; **caractérisée en ce que** l'unité d'interface (8) est un microprocesseur secondaire (8a) et les paramètres (P) des valeurs opérationnelles sont mémorisés dans ledit microprocesseur secondaire et sont directement sélectionnés à partir du champ de visualisation graphique (CV) par l'intermédiaire d'une unité périphérique (10) reliée à l'unité d'interface (8) elle-même.

2. L'unité dentaire selon la revendication 1, **caractérisée en ce que** ladite unité à microprocesseur secondaire (8a) est séparée.

3. L'unité dentaire selon la revendication 1, **caractérisée en ce que** l'unité d'interface (8) comprend une unité (8g) de traitement graphique en temps réel.

4. L'unité dentaire selon la revendication 1, **caractérisée en ce que** l'unité d'interface (8) fait partie intégrante de l'unité à microprocesseur principale (6).

5. L'unité dentaire selon la revendication 1, **caractérisée en ce que** l'unité d'interface (8) génère un graphique cartésien indiquant, sur l'axe des ordonnées, les valeurs (V) de couple et, sur l'axe des abscisses, les valeurs de temps (t) dans les limites desquelles le graphique en temps réel (TR) de la valeur de couple (V5) est affiché.

6. L'unité dentaire selon la revendication 1, **caractérisée en ce que** l'unité de contrôle (9) est dotée de moyens (11) servant à limiter la valeur maximum (VM) pouvant être affectée à la valeur de couple (V) en fonction du type d'opération et du type de pièce à main (5) ; la valeur maximum (VM) de la valeur (V) pouvant être affectée à la pièce à main (5) étant affichée dans le champ de visualisation graphique (CV) sous la forme d'une droite (R) parallèle à l'axe des abscisses du graphique.

7. L'unité dentaire selon la revendication 6, **caractérisée en ce que** l'unité d'interface (8) comprend une unité périphérique (12) d'émission d'un signal audible, activée par l'unité d'interface (8) elle-même quand la valeur de couple (V) se rapproche de la valeur maximum (VM) affectée.

8. L'unité dentaire selon la revendication 1, **caractérisée en ce que** l'unité d'interface (8) et le microprocesseur (6) sont dotés de banques de mémoire (13) servant à mémoriser les graphiques (TR) tracés sur l'écran (7) en temps réel.

9. L'unité dentaire selon la revendication 8, **caractérisée en ce que** l'unité d'interface (8) permet d'afficher simultanément et de superposer dans le champ de visualisation (CV) de l'écran (7) deux, ou plus, graphiques (TR) mémorisés.

10. L'unité dentaire selon la revendication 1, **caractérisée en ce que** l'unité d'interface (8) est reliée à et communique avec le microprocesseur (6) de manière à générer le graphique (TR) dans le champ de visualisation graphique (CV) en temps réel quand la pièce à main (5) sélectionnée est activée et à maintenir le graphique (TR) à l'écran quand la pièce à main (5) est désactivée de manière à ce que le graphique (TR) puisse reprendre à partir du même point quand la pièce à main (5) est réactivée, obtenant ainsi un graphique (TR) ininterrompu sur l'écran (7).
